# EUROPEAN PATENT APPLICATION

(11) **EP 4 521 791 A1**
(43) Date of publication of application: **12.03.2025**
(21) Application number: 23814904.1
(22) Date of filing: 09.05.2023
(51) Int. Cl.: H04W 8/24

(54) **INFORMATION TRANSMISSION METHOD AND APPARATUS**

(30) Priority: 30.05.2022 CN 202210597225
(71) Applicant: Huawei Technologies Co., Ltd., Shenzhen, Guangdong 518129 (CN)
(72) Inventor: HE, Jia, Shenzhen, Guangdong 518129 (CN); ZHOU, Zhi, Shenzhen, Guangdong 518129 (CN); LI, Xianjin, Shenzhen, Guangdong 518129 (CN)
(74) Representative: Körber, Martin Hans
(86) International application number: PCT/CN2023/092937
(87) International publication number: WO 2023/231718

(57) **Abstract**

This application provides an information transmission method and an apparatus, to reduce information transmission overheads as well as ensuring information fusion precision. The method includes: A first device sends first information to a second device, where the first information includes at least one of an identifier of the first device, position information of the first device, configuration information of the first device, or a time point at which the first device obtains second information, where the second information includes at least one of artificial intelligence information or sensing information. The second device determines indication information based on the first information and sends the indication information to the first device, where the indication information indicates a type and/or a format of information to be transmitted by the first device. The first device receives the indication information from the second device and determines third information based on the indication information, where the third information is the second information or a part of the second information, or is determined based on the second information. The first device sends the third information to the second device.

## Description

This application claims priority to Chinese Patent Application No. 202210597225.4, filed with the People's Republic of China National Intellectual Property Administration on May 30, 2022 and entitled "INFORMATION TRANSMISSION METHOD AND APPARATUS", which is incorporated herein by reference in its entirety.

### TECHNICAL FIELD

This application relates to the communication field, and more specifically, to an information transmission method and an apparatus.

### BACKGROUND

Integrated sensing and communication is a new information processing technology that implements collaboration between a sensing function and a communication function based on software and hardware resource sharing or information sharing. This can effectively improve system spectral efficiency, system hardware efficiency, and system information processing efficiency. Having the communication function and the sensing function is to be a capability trend of advanced wireless base stations and terminal devices. Enabling intelligent technologies in advanced wireless to obtain sensing data from an environment becomes a necessary means. The advanced wireless base stations are capable of monitoring statuses of targets in a coverage area, such as low-altitude flying objects, traffic flow, and hot spot people flow. The advanced wireless base stations can detect, position, recognize, and track some key targets in the coverage area. In addition, the advanced wireless base stations and the terminal devices are capable of sensing an ambient environment all day and in all weather conditions. Environment sensing can in turn enhance communication and is less susceptible to the effects of lighting and climate compared to cameras and lidars.

Currently, sensing data may be obtained through multi-static sensing. The multi-static sensing may be understood as that the sensing data is obtained from the environment through a plurality of terminal devices and/or base stations that have a communication function and a sensing function. To improve a sensing range and sensing precision, fusion of sensing data of a plurality of sites, a plurality of base stations, or a plurality of terminal devices becomes necessary. Although the multi-static sensing based on data fusion can effectively improve sensing performance, for the multi-static sensing, multi-level processing needs to be performed on individual data of each station at a data level, a feature level, and a decision level, and complexity of a multi-static sensing system is greatly intensified.

### SUMMARY

This application provides an information transmission method and an apparatus, to reduce information transmission overheads as well as ensuring information fusion precision.

According to a first aspect, an information transmission method is provided, where the method may be performed by a network device, or a chip or a chip system on a network device side, or may be performed by a terminal device, or a chip or a chip system on a terminal device side. The method includes: A first device sends first information to a second device, where the first information includes at least one of an identifier of the first device, position information of the first device, configuration information of the first device, or a time point at which the first device obtains second information, where the second information includes at least one of artificial intelligence information or sensing information. The first device receives indication information from the second device, where the indication information indicates a type and/or a format of information to be transmitted by the first device. The first device determines third information based on the indication information, where the third information is the second information or a part of the second information, or is determined based on the second information. The first device sends the third information to the second device. The first device may be the terminal device, a base station, or a chip or a chip system in the terminal device or the base station. The second device may be a sensing center or another device that can perform fusion processing on artificial intelligence information or sensing information, or may be chips or chip systems in these sensing devices or fusion processing devices. Transport block sizes of information in different formats are different.

Based on the foregoing solution, the first device sends the first information to the second device, where the first information may indicate a sensing capability, a communication capability, and a computing capability of the first device. The second device may determine, based on the first information sent by the first device, the indication information indicating the type and/or the format of the information to be transmitted by the first device and send the indication information to the first device. The first device transmits the third information to the second device based on the indication information sent by the second device, where the third information is determined based on at least one of the artificial intelligence information or the sensing information obtained by the first device. When the second device determines the indication information, at least one of the computing capability of the first device, the sensing capability of the first device, the communication capability of the first device, communication capacity pressure of the second device, and an information requirement of the second device is considered. For example, when the second device determines that current fusion quality of the artificial intelligence information and/or the sensing information does not meet the information requirement of the second device, the second device may indicate, by using the indication information, that the information to be transmitted by the first device is original data information obtained by the first device, so that information fusion precision can be ensured; or when the second device determines that current fusion quality of the artificial intelligence information and/or the sensing information meets the information requirement of the second device, and current communication capacity pressure of the second device is large, the second device may indicate, by using the indication information, that the information to be transmitted by the first device is information that has a small transport block size and that is obtained through compression of original data information, so that information transmission overheads can be reduced. Therefore, the technical solution provided in this embodiment of this application can reduce information transmission overheads as well as ensuring information fusion precision.

With reference to the first aspect, in some implementations of the first aspect, the type of the information includes dynamic environment information and static environment information.

With reference to the first aspect, in some implementations of the first aspect, the type of the information includes at least one of the following manners: environment information sent periodically, environment information sent semi-statically, and environment information sent at a time. The dynamic environment information may be the environment information sent periodically, and the static environment information may be the environment information sent semi-statically or the environment information sent at a time.

With reference to the first aspect, in some implementations of the first aspect, the second information is the original data information obtained by the first device through scanning by using different beams or at different positions. The original data information may be referred to as information in a first format.

With reference to the first aspect, in some implementations of the first aspect, that the third information is determined based on the second information includes: The third information is scattering point information or image data information determined based on the second information; or the third information is polygon or polyhedron information, or imaging feature information determined based on the second information. For example, the third information is the scattering point information or the image data information determined based on the original data information; or the third information is the polygon or polyhedron information, or the imaging feature information determined based on the original data information. The scattering point information may be referred to as information in a second format, the polygon or polyhedron information may be referred to as information in a third format, the image data information may be referred to as information in a fourth format, and the imaging feature information may be referred to as information in a fifth format.

With reference to the first aspect, in some implementations of the first aspect, the original data information includes at least one of the following: an amplitude, a phase, a time delay, polarization information, or Doppler information of a scanned echo signal; the scattering point information includes at least one of the following: coordinates, power, or a velocity of a scattering point; the polygon or polyhedron information includes at least one of the following: a center, a size, a normal direction, a category, or a velocity of a polygon or a polyhedron; the image data information includes at least one of the following: coordinates, a phase, or an amplitude of a sample; and/or the imaging feature information includes at least one of the following: a contour, a category, a texture, a color, polarization, a material, or a size.

With reference to the first aspect, in some implementations of the first aspect, that the third information is determined based on the second information includes: The third information is determined based on compression of the second information. For example, the third information is determined based on the compression of the original data information.

According to a second aspect, an information transmission method is provided, where the method may be performed by a sensing center, or a chip or a chip system on a sensing center side. The method includes: A second device receives first information from a first device, where the first information includes at least one of an identifier of the first device, position information of the first device, configuration information of the first device, or a time point at which the first device obtains second information, where the second information includes at least one of artificial intelligence information or sensing information. The second device sends indication information to the first device, where the indication information is determined by the second device based on the first information, and the indication information indicates a type and/or a format of information to be transmitted by the first device. The second device receives third information from the first device, where the third information is the second information or a part of the second information, or is determined by the first device based on the second information. The sensing center is a device that can perform fusion processing on the artificial intelligence information or the sensing information.

Based on the foregoing solution, the second device receives the first information from the first device, where the first information may indicate a sensing capability, a communication capability, and a computing capability of the first device. The second device may determine, based on the first information, the indication information indicating the type and/or the format of the information to be transmitted by the first device, and send the indication information to the first device. The first device transmits the third information to the second device based on the indication information sent by the second device, where the third information is determined based on the at least one of the artificial intelligence information or the sensing information obtained by the first device. When the second device determines the indication information, at least one of the computing capability of the first device, the sensing capability of the first device, the communication capability of the first device, communication capacity pressure of the second device, and an information requirement of the second device is considered. For example, when the second device determines that current fusion quality of the artificial intelligence information and/or the sensing information does not meet the information requirement of the second device, the second device may indicate, by using the indication information, that the information to be transmitted by the first device is original data information obtained by the first device, so that information fusion precision can be ensured; or when the second device determines that current fusion quality of the artificial intelligence information and/or the sensing information meets the information requirement of the second device, and current communication capacity pressure of the second device is large, the second device may indicate, by using the indication information, that the information to be transmitted by the first device is information that has a small transport block size and that is obtained through compression of original data information, so that information transmission overheads can be reduced. Therefore, the technical solution provided in this embodiment of this application can reduce information transmission overheads as well as ensuring information fusion precision.

With reference to the second aspect, in some implementations of the second aspect, the indication information is determined by the second device based on the first information, the communication capacity pressure of the second device, and the information requirement of the second device.

With reference to the second aspect, in some implementations of the second aspect, the type of the information includes dynamic environment information and static environment information.

With reference to the second aspect, in some implementations of the second aspect, the type of the information includes at least one of the following manners: environment information sent periodically, environment information sent semi-statically, and environment information sent at a time. The dynamic environment information may be the environment information sent periodically, and the static environment information may be the environment information sent semi-statically or the environment information sent at a time.

With reference to the second aspect, in some implementations of the second aspect, the second information is the original data information obtained by the first device through scanning by using different beams or at different positions.

With reference to the second aspect, in some implementations of the second aspect, that the third information is determined by the first device based on the second information includes: The third information is scattering point information or image data information determined by the first device based on the second information; or the third information is polygon or polyhedron information, or imaging feature information determined by the first device based on the second information. For example, the third information is the scattering point information or the image data information determined by the first device based on the original data information; or the third information is the polygon or polyhedron information, or the imaging feature information determined by the first device based on the original data information.

With reference to the second aspect, in some implementations of the second aspect, the original data information includes at least one of the following: an amplitude, a phase, a time delay, polarization information, or Doppler information of a scanned echo signal; the scattering point information includes at least one of the following: coordinates, power, or a velocity of a scattering point; the polygon or polyhedron information includes at least one of the following: a center, a size, a normal direction, a category, or a velocity of a polygon or a polyhedron; the image data information includes at least one of the following: coordinates, a phase, or an amplitude of a sample; and/or the imaging feature information includes at least one of the following: a contour, a category, a texture, a color, polarization, a material, or a size.

With reference to the second aspect, in some implementations of the second aspect, that the third information is determined by the first device based on the second information includes: The third information is determined by the first device based on compression of the second information.

According to a third aspect, a communication apparatus is provided, where the apparatus may be used in the first device according to the first aspect. The apparatus includes: a transceiver unit, configured to send first information to a second device, where the first information includes at least one of an identifier of the apparatus, position information of the apparatus, configuration information of the apparatus, or a time point at which the apparatus obtains second information, where the second information includes at least one of artificial intelligence information or sensing information, where the transceiver unit is further configured to receive indication information from the second device, where the indication information indicates a type and/or a format of information to be transmitted by the apparatus; and a processing unit, configured to determine third information based on the indication information, where the third information is the second information or a part of the second information, or is determined based on the second information, where the transceiver unit is further configured to send the third information to the second device.

With reference to the third aspect, in some implementations of the third aspect, the type of the information includes dynamic environment information and static environment information.

With reference to the third aspect, in some implementations of the third aspect, the type of the information includes at least one of the following manners: environment information sent periodically, environment information sent semi-statically, and environment information sent at a time.

With reference to the third aspect, in some implementations of the third aspect, the second information is original data information obtained by the apparatus through scanning by using different beams or at different positions.

With reference to the third aspect, in some implementations of the third aspect, that the third information is determined based on the second information includes: The third information is scattering point information or image data information determined based on the second information; or the third information is polygon or polyhedron information, or imaging feature information determined based on the second information.

With reference to the third aspect, in some implementations of the third aspect, the original data information includes at least one of the following: an amplitude, a phase, a time delay, polarization information, or Doppler information of a scanned echo signal; the scattering point information includes at least one of the following: coordinates, power, or a velocity of a scattering point; the polygon or polyhedron information includes at least one of the following: a center, a size, a normal direction, a category, or a velocity of a polygon or a polyhedron; the image data information includes at least one of the following: coordinates, a phase, or an amplitude of a sample; and/or the imaging feature information includes at least one of the following: a contour, a category, a texture, a color, polarization, a material, or a size.

With reference to the third aspect, in some implementations of the third aspect, that the third information is determined based on the second information includes: The third information is determined based on compression of the second information.

According to a fourth aspect, a communication apparatus is provided, where the apparatus may be used in the second device according to the second aspect. The apparatus includes a transceiver unit and a processing unit. The transceiver unit is configured to receive first information from a first device, where the first information includes at least one of an identifier of the first device, position information of the first device, configuration information of the first device, or a time point at which the first device obtains second information, where the second information includes at least one of artificial intelligence information or sensing information. The processing unit is configured to determine indication information based on the first information, where the indication information indicates a type and/or a format of information to be transmitted by the first device. The transceiver unit is further configured to send the indication information to the first device. The transceiver unit is further configured to receive third information from the first device, where the third information is the second information or a part of the second information, or is determined by the first device based on the second information.

With reference to the fourth aspect, in some implementations of the fourth aspect, the indication information is determined by the processing unit based on the first information, communication capacity pressure of the second device, and an information requirement of the second device.

With reference to the fourth aspect, in some implementations of the fourth aspect, the type of the information includes dynamic environment information and static environment information.

With reference to the fourth aspect, in some implementations of the fourth aspect, the type of the information includes at least one of the following manners: environment information sent periodically, environment information sent semi-statically, and environment information sent at a time.

With reference to the fourth aspect, in some implementations of the fourth aspect, the second information is the original data information obtained by the first device through scanning by using different beams or at different positions.

With reference to the fourth aspect, in some implementations of the fourth aspect, that the third information is determined by the first device based on the second information includes: The third information is scattering point information or image data information determined by the first device based on the second information; or the third information is polygon or polyhedron information, or imaging feature information determined by the first device based on the second information.

With reference to the fourth aspect, in some implementations of the fourth aspect, the original data information includes at least one of the following: an amplitude, a phase, a time delay, polarization information, or Doppler information of a scanned echo signal; the scattering point information includes at least one of the following: coordinates, power, or a velocity of a scattering point; the polygon or polyhedron information includes at least one of the following: a center, a size, a normal direction, a category, or a velocity of a polygon or a polyhedron; the image data information includes at least one of the following: coordinates, a phase, or an amplitude of a sample; and/or the imaging feature information includes at least one of the following: a contour, a category, a texture, a color, polarization, a material, or a size.

According to a fifth aspect, a communication device is provided, and includes a processor and a memory. The memory is configured to store a computer program, and the processor is configured to execute the computer program stored in the memory, to enable the communication device to perform the method according to the first aspect or any one of the possible implementations of the first aspect.

According to a sixth aspect, a communication device is provided, and includes a processor and a memory. The memory is configured to store a computer program, and the processor is configured to execute the computer program stored in the memory, to enable the communication device to perform the method according to the second aspect or any one of the possible implementations of the second aspect.

According to a seventh aspect, a communication apparatus is provided, and includes an input/output interface and a logic circuit. The input/output interface is configured to obtain input information and/or output information. The logic circuit is configured to perform the method according to any one of the foregoing aspects or any one of the possible implementations of the foregoing aspects, to perform processing based on the input information and/or generate the output information.

According to an eighth aspect, a communication system is provided, and includes a first device in the method according to the first aspect or the second aspect, another communication device communicating with the first device, a second device, and another communication device communicating with the second device.

According to a ninth aspect, a computer-readable storage medium is provided, where the computer-readable storage medium stores a computer program. When the computer program is run on a computer, the computer is enabled to perform the method according to the first aspect or any one of the possible implementations of the first aspect.

According to a tenth aspect, a computer-readable storage medium is provided, where the computer-readable storage medium stores a computer program. When the computer program is run on a computer, the computer is enabled to perform the method according to the second aspect or any one of the possible implementations of the second aspect.

According to an eleventh aspect, a computer program product including instructions is provided. When the instructions are executed by a computer, a communication apparatus is enabled to implement the method according to the first aspect or any one of the possible implementations of the first aspect.

According to a twelfth aspect, a computer program product including instructions is provided. When the instructions are executed by a computer, a communication apparatus is enabled to implement the method according to the second aspect or any one of the possible implementations of the second aspect.

The solutions provided in the third aspect to the twelfth aspect are for implementing or cooperating to implement the method provided in the first aspect or the second aspect, and therefore, can achieve beneficial effects the same as or corresponding to those in the first aspect or the second aspect. Details are not described herein again.

### BRIEF DESCRIPTION OF DRAWINGS

FIG. 1 is a diagram of an architecture of a system to which an embodiment of this application is applicable;
FIG. 2 is a diagram of indoor environment radar point clouds;
FIG. 3 is a diagram of a radar point cloud fusion result;
FIG. 4 is a schematic flowchart of interaction of an information transmission method according to an embodiment of this application;
FIG. 5 is a diagram of polygon information determined based on original data information according to an embodiment of this application;
FIG. 6 is a diagram of determining imaging feature information based on original data information according to an embodiment of this application;
FIG. 7 is an example of an information transmission method according to an embodiment of this application;
FIG. 8 is another example of an information transmission method according to an embodiment of this application;
FIG. 9 is another example of an information transmission method according to an embodiment of this application;
FIG. 10 is a block diagram of a communication apparatus according to an embodiment of this application;
FIG. 11 is a block diagram of another communication apparatus according to an embodiment of this application; and
FIG. 12 is a block diagram of a communication device according to an embodiment of this application.

### DESCRIPTION OF EMBODIMENTS

The following describes the technical solutions of this application with reference to the accompanying drawings.

Embodiments of this application may be applied to various communication systems, for example, a wireless local area network (wireless local area network, WLAN) system, a narrowband internet of things (narrowband internet of things, NB-IoT) system, a global system for mobile communications (global system for mobile communications, GSM), an enhanced data rate for GSM evolution (enhanced data rate for gsm evolution, EDGE) system, a wideband code division multiple access (wideband code division multiple access, WCDMA) system, a code division multiple access 2000 (code division multiple access, CDMA 2000) system, a time division-synchronous code division multiple access (time division-synchronization code division multiple access, TD-SCDMA) system, a long term evolution (long term evolution, LTE) system, satellite communication, a 5th generation (5th generation, 5G) communication system, a 6th generation (6th generation, 6G) communication system, or a new communication system emerging in the future.

A communication system to which this application is applicable includes one or more transmit ends and one or more receive ends. Signal transmission between the transmit end and the receive end may be performed by using a radio wave, or may be performed by using transmission media such as visible light, a laser, infrared light, and an optical fiber.

For example, the transmit end may be a terminal device, a base station, or another device that can obtain sensing information and/or artificial intelligence information, or chips or chip systems in these devices. The receive end may be a sensing center that performs fusion processing on the sensing information and/or the artificial intelligence information, or a chip or a chip system in the sensing center.

The terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), an uncrewed aerial vehicle, a machine type communication (machine type communication, MTC) terminal, a wireless terminal in self-driving (self-driving), or the like. The user equipment includes vehicle user equipment.

For example, a network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), a device that bears a base station function in device to device (device to device, D2D), an access point (access point, AP) in a wireless fidelity (wireless fidelity, Wi-Fi) system, a radio relay node, a wireless backhaul node, an uncrewed aerial vehicle, a transmission point (transmission point, TP), a transmission reception point (transmission reception point, TRP), a gNB or a transmission point (for example, a TRP or a TP) in new radio (new radio, NR), one antenna panel or a group of antenna panels (including a plurality of antenna panels) of a base station in NR, or a network node that constitutes a gNB or a transmission point, for example, a baseband unit (building baseband unit, BBU) or a distributed unit (distributed unit, DU). Alternatively, a network device may be a vehicle-mounted device, a wearable device, a network device in a 5G network, a network device in a future evolved PLMN network, or the like, or a network device deployed on a satellite. This is not limited.

The network device has abundant product forms. For example, in a product implementation process, the BBU and a radio frequency unit (radio frequency unit, RFU) may be integrated into a same device, and the device is connected to an antenna array through a cable (for example but not limited to a feeder). The BBU and an RFU may alternatively be disposed separately, are connected by using an optical fiber, and communicate with each other by using, for example but not limited to a common public radio interface (common public radio interface, CPRI) protocol. In this case, the RFU is usually referred to as a remote radio unit (remote radio unit, RRU), and is connected to the antenna array through a cable. In addition, the RRU may alternatively be integrated with the antenna array. For example, this structure is for an active antenna unit (active antenna unit, AAU) product in a current market.

In addition, the BBU may be further divided into a plurality of parts. For example, the BBU may be further divided into a central unit (central unit, CU) and a distributed unit (distribute unit, DU) based on real-time performance of a processed service. The CU is responsible for processing a non-real-time protocol and service, and the DU is responsible for processing a physical layer protocol and a real-time service. Further, a part of physical layer functions may be separated from the BBU or the DU and integrated into the AAU.

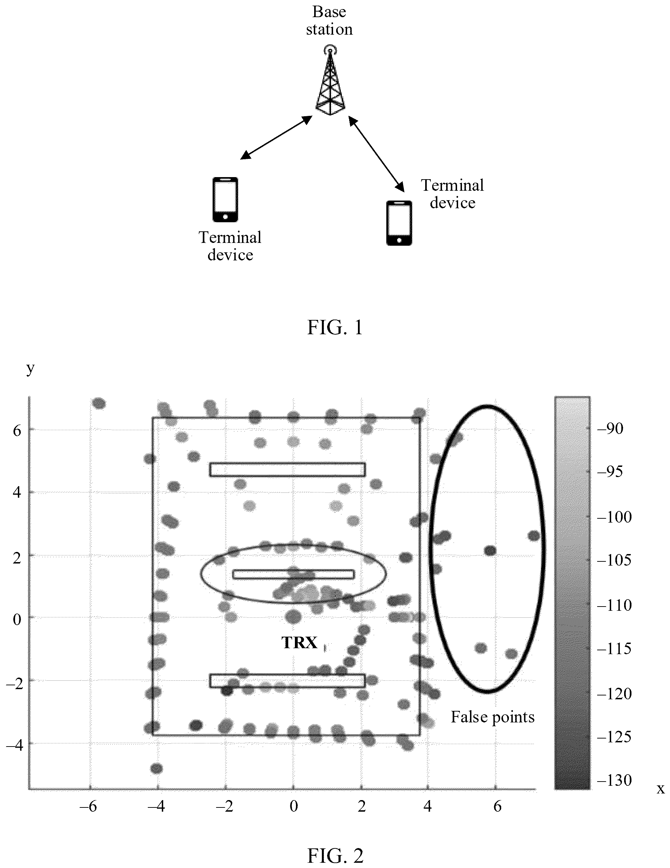

FIG. 1 is a diagram of an architecture of a system to which an embodiment of this application is applicable. The system includes a base station, a terminal device, and a sensing center. The first device in embodiments of this application includes the base station and/or the terminal device, and the second device in embodiments of this application includes the sensing center. The base station and the terminal device have a sensing capability and a communication capability, and can obtain sensing information and/or artificial intelligence information. The sensing center is configured to: receive the sensing information and/or the artificial intelligence information that are/is sent by the base station and the terminal device, and perform fusion processing on the sensing information and/or the artificial intelligence information. The system may further include another device that can obtain the artificial intelligence information or the sensing information. The sensing information in embodiments of this application may also be referred to as sensing data. This is not limited.

To facilitate understanding of embodiments of this application, the following briefly describes existing technical solutions related to embodiments of this application.

Integrated sensing and communication refers to a new information processing technology that implements collaboration between a sensing function and a communication function based on software and hardware resource sharing or information sharing. This can effectively improve system spectral efficiency, system hardware efficiency, and system information processing efficiency.

Having the communication function and the sensing function is to be a capability trend of advanced wireless base stations and terminal devices. Enabling intelligent technologies in advanced wireless to obtain sensing information from an environment becomes a necessary means. The advanced wireless base stations are capable of monitoring statuses of targets in a coverage area, such as low-altitude flying objects, traffic flow, and hot spot people flow. The advanced wireless base stations can detect, position, recognize, and track some key targets in the coverage area. In addition, the advanced wireless base stations and the terminal devices are capable of sensing an ambient environment all day and in all weather conditions. Environment sensing can in turn enhance communication and is less susceptible to the effects of lighting and climate compared to cameras and lidars.

Single-TRP sensing means that only one device senses an ambient environment. In a single-TRP/terminal sensing research, an architecture design of a communication base station and a terminal device is greatly different from that of a traditional radar/lidar. As a result, single-TRP sensing performance is subject to the following limitations:
(1) low power, causing a limited sensing distance;
(2) medium wavelength, causing a limited incident angle and a limited resolution; or
(3) small radar cross section (radar cross section, RCS) area, causing a limited observed target.

Multi-static sensing means that a plurality of devices simultaneously sense an ambient environment. In comparison with single-TRP sensing, the multi-static sensing using data fusion has the following advantages:
(1) providing stable operating performance: Multiple TRPs can all provide target information, and when one TRP is not in a sensing operating state or sensing performance of the TRP deteriorates due to external interference, sensing operating performance of another TRP is not affected;
(2) improving a spatial resolution: The multiple TRPs can be used for constituting a large aperture, to obtain a higher resolution than that of a single TRP;
(3) obtaining more accurate positioning information: Different sensing information provided by the multiple TRPs reduces a set of assumptions about a target, and in addition, effective synthesis of a plurality of independent measurements of a same target can improve reliability and performance; and
(4) obtaining information that cannot be obtained by a single TRP: Position complementarity of the multiple TRPs can effectively expand a spatial coverage area.

To improve a sensing range and sensing precision, fusion of sensing data of a plurality of sites, a plurality of base stations, or a plurality of terminal devices becomes necessary. Although the multi-static sensing based on data fusion can effectively improve sensing performance, for the multi-static sensing, multi-level processing needs to be performed on individual data of each station at a data level, a feature level, and a decision level, and complexity of a multi-static sensing system is greatly intensified.

A point cloud is a dataset of points in a coordinate system, and includes rich information, which may be three-dimensional coordinates X, Y, Z, a color, an intensity value, time, and the like. The point cloud is usually obtained by using a three-dimensional imaging sensor, for example, obtained by using a binocular camera, a three-dimensional scanner, or an RGB-D camera. In addition, a current mainstream method for obtaining a point cloud is lidar (LiDAR) detection and measurement. A point cloud obtained in this manner may be referred to as a lidar point cloud, and is mainly applied to self-driving, surveying and mapping, and another field. In recent years, a manner of obtaining a point cloud is gradually extended to the electromagnetic wave/radar field, and a point cloud obtained in this manner may be referred to as a radar point cloud. In single-TRP sensing, extraction of a point cloud from an original echo for environment sensing is one of main technical paths of current single-TRP sensing.

In comparison with mainstream lidar point clouds, single-TRP radar point clouds present definite sparsity. An indoor environment is used as an example. A quantity of lidar point clouds is tens of thousands, but a quantity of radar point clouds is only thousands. In comparison with the lidar point clouds, the radar point clouds mainly have the following problems in three aspects:
(1) low resolution of point clouds caused by limitations of an antenna length and quantity;
(2) false points and missing of a part of points of a target caused by a plurality of reflections of an electromagnetic wave; and
(3) due to a beam width, a point cloud position error increases as an angle of departure (angle of departure, AoD) and an angle of arrival (angle of arrival, AoA) increase.

FIG. 2 is a diagram of indoor environment radar point clouds. It can be seen that the radar point clouds present: definite sparsity, missing of a part of points of a target, false points, and a point cloud position error increases as an AoD and an AoA increase. As a result, it is extremely difficult to directly apply laser point processing and a reconstruction algorithm to the radar point cloud, and special designs are needed in data processing, multi-TRP data fusion, the reconstruction algorithm, and the like.

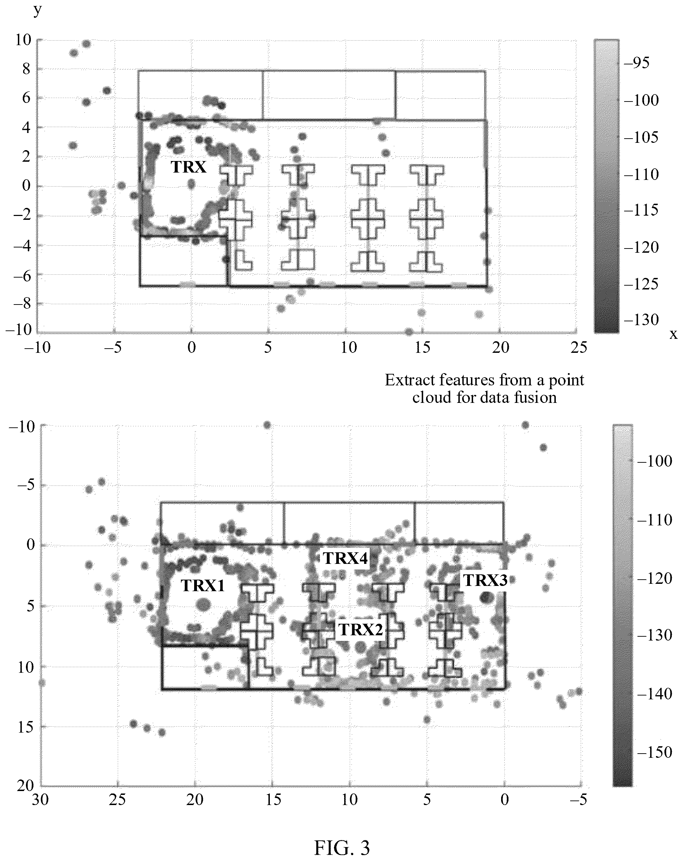

In existing multi-lidar data fusion, because a lidar point cloud has high precision and few noises, simple data fusion, for example, simple overlaying of multi-source point cloud data, can be implemented only through pre-processing such as coordinate alignment and registration. FIG. 3 is a diagram of a radar point cloud fusion result. If only lidar point cloud fusion is referenced, a multi-transmission reception point (multi-transmission reception point, Multi-TRP) radar point cloud fusion result obtained through coordinate alignment and registration is shown in FIG. 3. Because a radar point cloud or point cloud-like data carries only a small amount of information such as coordinates, angles, a time delay, and an amplitude, during multi-static sensing fusion, only data point cloud overlaying such as coordinate alignment and registration can be performed. However, due to the small amount of information, it is extremely difficult to remove a quantity of false points caused by a plurality of special reflections of radar. As a result, it is extremely difficult to delete the false points during data fusion, and the quantity of false points increases with data fusion. In addition, due to a point cloud position error, it is usually extremely difficult to achieve accuracy beyond that of a single TRP through multi-TRP data fusion.

Embodiments of this application provide an information transmission method, to reduce information transmission overheads as well as ensuring information fusion precision. A first device in embodiments of this application may be a base station, a terminal device, or another device that can obtain artificial intelligence information or sensing information. A second device in embodiments of this application may be a sensing center or another device that can perform fusion processing on the artificial intelligence information or the sensing information. The sensing center may be specifically a centralized processing device. This is not specifically limited in this application.

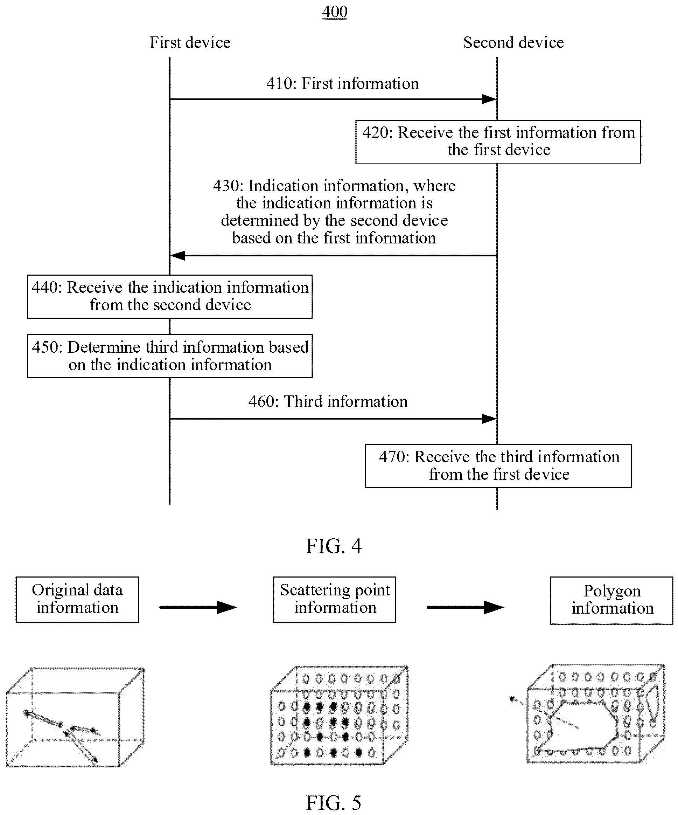

FIG. 4 is a schematic flowchart of interaction of an information transmission method 400 according to an embodiment of this application.

410: A first device sends first information to a second device, where the first information includes at least one of an identifier of the first device, position information of the first device, configuration information of the first device, or a time point at which the first device obtains second information. The second information includes at least one of artificial intelligence (artificial intelligence, AI) information or sensing information, and the second information may alternatively be semantic information extracted by the first device by using AI. The first information may indicate a sensing capability, a communication capability, and a computing capability of the first device. The sensing capability of the first device may include a coverage area of the first device, a resolution of the second information obtained by the first device, a type of information obtained by the first device, and the like. The communication capability of the first device includes a communication capacity of the first device, and the like. The semantic information in computer vision is classified into visual layer semantic information, object layer semantic information, and concept layer semantic information. A visual layer is a bottom layer that is usually understood, the visual layer semantic information includes a color, a texture, a shape, and the like, and these pieces of information may also be referred to as bottom layer feature semantic information. An object layer is an intermediate layer, and the object layer semantic information usually includes an attribute feature, that is, a status of an object at a moment, and the like. A concept layer is a high layer, and the concept layer semantic information is an object that is most approximate to human understanding and that is expressed by an image. To be simple, for example, there are sands, a blue sky, and seawater on a map. The visual layer semantic information is differentiation between blocks, the object layer semantic information is the sands, the blue sky, and the seawater, and the concept layer semantic information is a beach.

The first device may be referred to as a site, and the first information may also be referred to as site information (site information). The first device may be a transmitter, or may be a receiver. When the first device is the transmitter, the identifier of the first device is a transmitter identifier (transmitter identity, TX ID). When the first device is the receiver, the identifier of the first device is a receiver identifier (receiver identity, RX ID). The configuration information of the first device includes the computing capability and the communication capacity of the first device, and other information.

Optionally, the second information may be original data information obtained by the first device through scanning by using different beams (beams). The original data information obtained by the first device through scanning by using different beams may be referred to as multi-beam information. When the first device includes N different beams, the second information may be original data information obtained by the first device through scanning by using the N different beams. For example, N is equal to 2, and the second information includes original data information obtained by the first device through scanning by using a beam 1 and original data information obtained by the first device through scanning by using a beam 2, where N is a positive integer.

Optionally, the second information may alternatively be original data information obtained by the first device through scanning at different positions (positions). The original data information obtained by the first device through scanning at different positions may be referred to as multi-position data information. For example, the second information includes original data information obtained by the first device through scanning at a position 1 and original data information obtained by the first device through scanning at a position P, where P is a positive integer.

The original data information includes at least one of the following: an amplitude (amplitude), a phase (phase), a time delay (time delay), polarization information, or Doppler (doppler) information of a scanned echo signal. The original data information obtained by the first device may further include other information. This is not limited in this application.

For example, the original data information obtained by the first device through scanning by using different beams includes at least one of the following: the amplitude, the phase, the time delay, the polarization information, or the Doppler information of the scanned echo signal. Optionally, the original data information obtained by the first device through scanning by using different beams may further include beam information used when the first device obtains the original data information, for example, a beam orientation (orientation). Table 1 shows examples of the site information (the first information) and the multi-beam information (the second information).

**Table 1**

| Site information | TX ID/RX ID, time point at which the second information is obtained, position information, and configuration information |
|---|---|
| Beam 1 | Amplitude, phase, and Doppler information of a scanned echo signal |
| Beam 2 | Amplitude, phase, and Doppler information of a scanned echo signal |
| ... | Amplitude, phase, and Doppler information of a scanned echo signal |
| Beam N | Amplitude, phase, and Doppler information of a scanned echo signal |

For example, the original data information obtained by the first device through scanning at different positions includes at least one of the following: the amplitude or the phase of the scanned echo signal. Optionally, the original data information obtained by the first device through scanning at different positions may further include the position information used when the first device obtains the original data information. Table 2 shows examples of the site information (the first information) and the multi-position data information (the second information).

**Table 2**

| Site information | TX ID/RX ID, time point at which the second information is obtained, position information, and configuration information |
|---|---|
| Position 1 | Amplitude and phase of a scanned echo signal |
| Position 2 | Amplitude and phase of a scanned echo signal |
| ... | Amplitude and phase of a scanned echo signal |
| Position P | Amplitude and phase of a scanned echo signal |

420: The second device receives the first information from the first device.

430: The second device sends indication information to the first device, where the indication information is determined by the second device based on the first information sent by the first device, and the indication information indicates a type and/or a format of information to be transmitted by the first device. Specifically, the second device determines the indication information based on the first information sent by the first device and sends the indication information to the first device. Transport block sizes of information in different formats are different. Optionally, the second device may separately send the indication information to a plurality of first devices, and the indication information sent to the plurality of first devices may be the same or different.

Optionally, the indication information may indicate only the type of the information to be transmitted by the first device, the indication information may indicate only the format of the information to be transmitted by the first device, or the indication information may indicate the type and the format of the information to be transmitted by the first device. This is not specifically limited.

Optionally, the type of the information includes dynamic environment information and static environment information. The dynamic environment information may be understood as dynamically changing environment information, for example, traffic flow information and information about a quantity of pedestrians. The static environment information may be understood as static and unchanged environment information in a long period of time (for example, several hours, several days, several months, or even a longer period of time), for example, building information and billboard information.

Optionally, the type of the information includes at least one of the following manners: environment information sent periodically, environment information sent semi-statically, and environment information sent at a time. The dynamic environment information may be the environment information sent periodically, and the static environment information may be the environment information sent semi-statically or the environment information sent at a time.

For example, the first information includes the configuration information of the first device. The second device may determine the computing capability and the communication capacity of the first device based on the configuration information of the first device, and determine, based on the computing capability and the communication capacity of the first device, the type and/or the format of the information to be transmitted by the first device.

For example, the first information includes the time point at which the first device obtains the second information, and the second device determines, based on the time point at which the first device obtains the second information, the type and/or the format of the information to be transmitted by the first device, so that an obtaining time point corresponding to the information to be transmitted by the first device is aligned with an obtaining time point corresponding to information to be transmitted by another site. For example, if the first device may obtain different types of the second information at different times, the type that is of the information to be transmitted by the first device and that is determined by the second device is a type of information whose obtaining time point is the same as that corresponding to the information to be transmitted by the another site.

Optionally, the indication information may be determined by the second device based on the first information, communication capacity pressure of the second device, and an information requirement of the second device. For example, the second device may learn, based on the first information, that information obtained by the first device includes a first type of information and a second type of information. The second device determines, based on the information requirement of the second device, that the first device needs to transmit the first type of information. If current communication capacity pressure of the second device is high, the second device may indicate, by using the indication information, that the type of the information to be transmitted by the first device is the first type and that the format of the information to be transmitted is a format with a small transport block size. If current communication capacity pressure of the second device is low, the second device may indicate, by using the indication information, that the type of the information to be transmitted by the first device is the first type and that the format of the information to be transmitted is a format with a large transport block size.

For another example, the second device may learn, based on the first information, that information obtained by the first device includes a first type of information and a second type of information. The second device determines that current fusion quality of the artificial intelligence information and/or the sensing information does not meet the information requirement of the second device, and the first device needs to transmit the original data information. If current communication capacity pressure of the second device is low, the second device may indicate, by using the indication information, that the type of the information to be transmitted by the first device is the first type and the second type and that the format of the information to be transmitted is a format with a large transport block size. If current communication capacity pressure of the second device is high, the second device may indicate, by using the indication information, that the type of the information to be transmitted by the first device is the first type and that the format of the information to be transmitted is a format with a small transport block size. The first type of information is more important than the second type of information.

Optionally, the indication information may be determined by the second device based on the first information and the communication capacity pressure of the second device. For example, the second device may learn the sensing capability of the first device based on the first information. If current communication capacity pressure of the second device is large, the second device may indicate, by using the indication information, that the format of the information to be transmitted by the first device is a format with a small transport block size. If current communication capacity pressure of the second device is small, the second device may indicate, by using the indication information, that the format of the information to be transmitted by the first device is a format with a large transport block size.

Optionally, the indication information may be determined by the second device based on the first information and the information requirement of the second device. For example, the second device may learn, based on the first information, that information obtained by the first device includes a first type of information and a second type of information. If the second device determines, based on the information requirement of the second device, that the first device needs to transmit the first type of information, the second device may indicate, by using the indication information, that the type of the information to be transmitted by the first device is the first type.

440: The first device receives the indication information from the second device.

450: The first device determines third information based on the indication information. The third information is the second information or a part of the second information, or is determined based on the second information. That the third information is determined based on the second information may be understood as that the third information is determined based on compression of the second information. For example, the third information may be determined based on compression of all the second information obtained by the first device. For another example, the third information may be determined based on compression of a part of the second information obtained by the first device.

In other words, the third information may be all the second information obtained by the first device, the third information may be the part of the second information obtained by the first device, the third information may be information obtained through compression of all the second information obtained by the first device, or the third information may be information obtained through compression of the part of the second information obtained by the first device.

For example, the third information may be all or a part of the original data information obtained by the first device. All or the part of the original data information obtained by the first device may be referred to as information in a first format.

For example, the third information may be scattering point information determined based on the second information. In other words, the third information may be the scattering point information determined based on all or a part of the original data information. The scattering point information may include at least one of the following: coordinates, power (power), or a velocity (velocity) of a scattering point. The coordinates of the scattering point include but are not limited to a Cartesian coordinate system (x, y, z), a polar coordinate system (r, Q, ψ), and the like, and another coordinate system that can represent position information is also applicable. Table 3 shows examples of the scattering point information. Different scattering points include a scattering point 1, a scattering point 2, ..., and a scattering point S, where S is a positive integer. The scattering point information determined based on all or the part of the original data information may be referred to as information in a second format.

**Table 3**

| | |
|---|---|
| Scattering point 1 | Coordinates (x, y, z), power, and velocity |
| Scattering point 2 | Coordinates (x, y, z), power, and velocity |
| ... | Coordinates (x, y, z), power, and velocity |
| Scattering point S | Coordinates (x, y, z), power, and velocity |

In some application scenarios, information redundancy may exist in the scattering point information, or in some cases, transmission of the scattering point information causes excessively heavy communication load. When the first device has a very strong computing capability, the scattering point information needs to be further compressed, to implement extraction of higher-level semantics, for example, voxelization or polygon fitting of the scattering point.

For example, the third information may be polygon (polygon) or polyhedron information determined based on the second information. Specifically, the third information may be the scattering point information determined based on all or a part of the original data information, and then the polygon or polyhedron information determined based on the scattering point information. The polygon or polyhedron information may include at least one of the following: a center (center) of the polygon or polyhedron, a size (size), a normal direction (nor direction), a category (cate), or a velocity of a polygon or a polyhedron. The size of the polygon may be represented by using an edge point (edge point) of the polygon, and the size of the polyhedron may be represented by using a vertex of the polyhedron. Optionally, the polygon information may include at least one of the following: edge point information, the category, or the velocity of the polygon. The polyhedron information may include at least one of the following: vertex information, the category, or the velocity of the polyhedron. Table 4 shows examples of the polygon information. Different polygons include a polygon 1, a polygon 2, ..., and a polygon P, where P is a positive integer. The polygon or polyhedron information determined based on all or the part of the original data information may be referred to as information in a third format. FIG. 5 is a diagram of the polygon information determined based on the original data information according to an embodiment of this application.

**Table 4**

| | |
|---|---|
| Polygon 1 | Center, size, normal direction, category, and velocity |
| Polygon 2 | Center, size, normal direction, category, and velocity |
| ... | Center, size, normal direction, category, and velocity |
| Polygon P | Center, size, normal direction, category, and velocity |

For example, the third information may be image data information determined based on the second information. In other words, the third information may be the image data information determined based on all or a part of the original data information. The image data information may include at least one of the following: coordinates, a phase, or an amplitude of a sample (pixel). The coordinates of the sample include but are not limited to a Cartesian coordinate system (x, y, z), a polar coordinate system (r, Q, ψ), and the like, and another coordinate system that can represent position information is also applicable. Table 5 shows examples of the image data information. Different samples include a sample 1, a sample 2, ..., and a sample E, where E is a positive integer. The image data information determined based on all or the part of the original data information may be referred to as information in a fourth format.

**Table 5**

| | |
|---|---|
| Sample 1 | Coordinates, phase, and amplitude |
| Sample 2 | Coordinates, phase, and amplitude |
| ... | Coordinates, phase, and amplitude |
| Sample E | Coordinates, phase, and amplitude |

As a multi-frame image stream such as a video sample aspect ratio (sample aspect ratio, SAR) gradually emerges, an amount of image data may still be extremely large. In some application scenarios, information redundancy may exist in the image data information, or in some cases, transmission of the image data information may cause excessively heavy communication load. When the first device has a very strong computing capability, the image data information needs to be further compressed, to implement extraction of higher-level semantics.

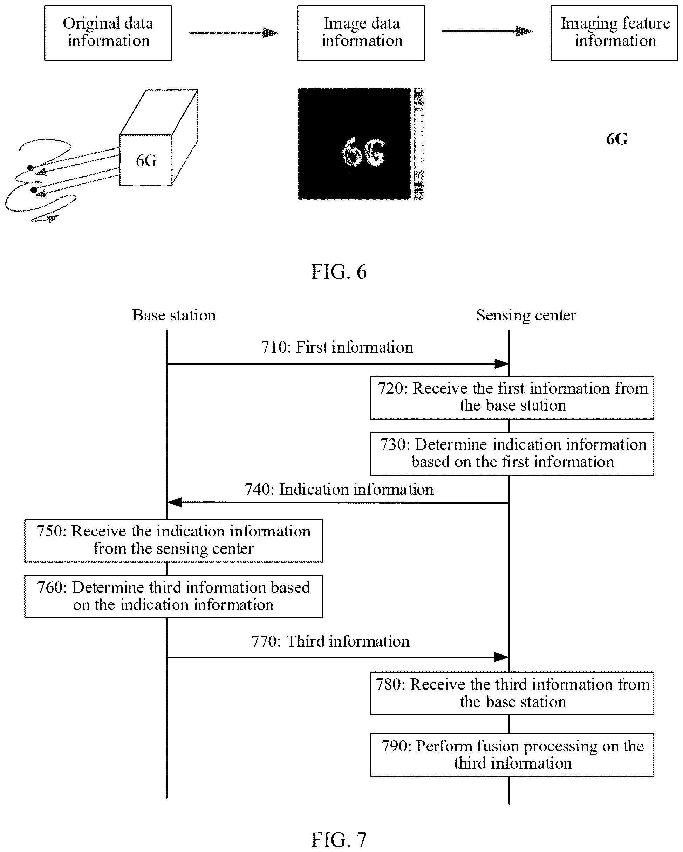

For example, the third information may be imaging feature (feature) information determined based on the second information. Specifically, the third information may be the image data information determined based on all or a part of the original data information, and then the imaging feature information determined based on the image data information. The imaging feature information may include at least one of the following: a contour (contour), a category (category), a texture, a color, polarization, a material, or a size. The color may be a pseudo color. For example, the imaging feature information includes the category, for example, a rabbit, a cat, or another category information. Table 6 shows examples of the imaging feature information. Different features include a feature 1, a feature 2, ..., and a feature F, where F is a positive integer. The imaging feature information determined based on all or the part of the original data information may be referred to as information in a fifth format. FIG. 6 is a diagram of determining the imaging feature information based on the original data information according to an embodiment of this application.

**Table 6**

| | |
|---|---|
| Feature 1 | Contour |
| Feature 2 | Category |
| ... | ... |
| Feature F | Color |

460: The first device sends the third information to the second device. The third information is the original data information, the scattering point information, the polygon or polyhedron information, the image data information, or the imaging feature information. Alternatively, the third information may be other information determined based on the original data information. This is not specifically limited in this application.

For example, when the second device indicates, by using the indication information, the first device to transmit the information in the first format, the first device sends the original data information to the second device. For example, when the second device indicates, by using the indication information, the first device to transmit the information in the fifth format, the first device sends the imaging feature information to the second device.

470: The second device receives the third information from the first device. The second device performs fusion processing on the third information.

Optionally, the second device may separately receive a plurality of pieces of first information from a plurality of first devices, where the pieces of first information are in one-to-one correspondence with the first devices. The second device may determine the indication information based on the first information separately sent by the plurality of first devices and separately send the indication information to the plurality of first devices, where the indication information is in one-to-one correspondence with the first devices. The plurality of first devices respectively send a plurality of pieces of third information to the second device based on the indication information, and the second device separately receives the plurality of pieces of third information from the plurality of first devices, where the pieces of third information are in one-to-one correspondence with the first devices. The second device may perform fusion processing on the plurality of pieces of third information.

In the technical solution provided in this embodiment of this application, the second device receives the first information from the first device, where the first information may indicate the sensing capability, the communication capability, and the computing capability of the first device. The second device may determine, based on the first information, the indication information indicating the type and/or the format of the information to be transmitted by the first device and send the indication information to the first device. The first device transmits the third information to the second device based on the indication information sent by the second device, where the third information is determined based on the at least one of the artificial intelligence information or the sensing information obtained by the first device. When the second device determines the indication information, at least one of the computing capability of the first device, the sensing capability of the first device, the communication capability of the first device, the communication capacity pressure of the second device, and the information requirement of the second device is considered. For example, when the second device determines that current fusion quality of the artificial intelligence information and/or the sensing information does not meet the information requirement of the second device, the second device may indicate, by using the indication information, that the information to be transmitted by the first device is original data information obtained by the first device, so that information fusion precision can be ensured; or when the second device determines that current fusion quality of the artificial intelligence information and/or the sensing information meets the information requirement of the second device, and current communication capacity pressure of the second device is large, the second device may indicate, by using the indication information, that the information to be transmitted by the first device is information that has a small transport block size and that is obtained through compression of original data information, so that information transmission overheads can be reduced. Therefore, the technical solution provided in this embodiment of this application can reduce information transmission overheads as well as ensuring information fusion precision.

The following describes specific implementations of embodiments of this application.

FIG. 7 is an example of an information transmission method according to an embodiment of this application. In this example, a sensing center indicates, by using indication information, that a format of information to be transmitted by a base station is original data information, that is, information in a first format.

710: The base station sends first information to the sensing center, where the first information includes at least one of an identifier of the base station, position information of the base station, configuration information of the base station, or a time point at which the base station obtains second information. The second information includes at least one of artificial intelligence information or sensing information, and the second information may alternatively be semantic information extracted by the base station by using AI.

The first information may indicate a sensing capability, a communication capability, and a computing capability of the base station. The sensing capability of the base station may include a coverage area of the base station, a resolution of the second information obtained by the base station, a type of information obtained by the base station, and the like. Optionally, a terminal device or another base station also sends first information to the sensing center. Both the base station and the terminal device may be referred to as sites, and the first information may also be referred to as site information.

Optionally, the second information may be the original data information obtained by the first device through scanning by using different beams. Optionally, the second information may alternatively be the original data information obtained by the first device through scanning at different positions.

720: The sensing center receives the first information from the base station.

Optionally, the sensing center may separately receive the first information from the terminal device or the another base station.

730: The sensing center determines the indication information based on the first information from the base station. Specifically, the sensing center may determine the indication information based on the first information, communication capacity pressure of the sensing center, and an information requirement of the sensing center.

Because current communication pressure of the sensing center is not high, a large quantity of resources may be allocated to backhaul artificial intelligence information and/or sensing information. In addition, current fusion quality of the artificial intelligence information and/or the sensing information does not meet a requirement, and original data needs to be used for improving sensing precision and enhancing data fusion performance. Therefore, the indication information determined by the sensing center indicates that the format of the information to be transmitted by the base station is the original data information, so that information fusion precision can be enhanced.

740: The sensing center sends the indication information to the base station.

Optionally, the sensing center may send indication information to the terminal device or the another base station. Optionally, the indication information sent by the sensing center to the terminal device or the another base station is determined based on the first information sent by the terminal device or the another base station. The indication information sent by the sensing center to the terminal device or the another base station may also be the same as the indication information sent to the base station. This is not specifically limited in this application.

750: The base station receives the indication information from the sensing center.

760: The base station determines third information based on the indication information, where the third information is the original data information, in other words, the third information is the second information or a part of the second information.

770: The base station sends the third information to the sensing center.

780: The sensing center receives the third information/the original data information from the base station.

Optionally, the sensing center may receive third information from the terminal device or the another base station. It should be understood that the third information sent by the terminal device or the another base station is determined and sent based on the indication information sent by the sensing center.

790: The sensing center performs fusion processing on the third information.

Optionally, the sensing center may perform fusion processing on the third information sent by the base station, the third information sent by the terminal device, and the third information sent by the another base station.

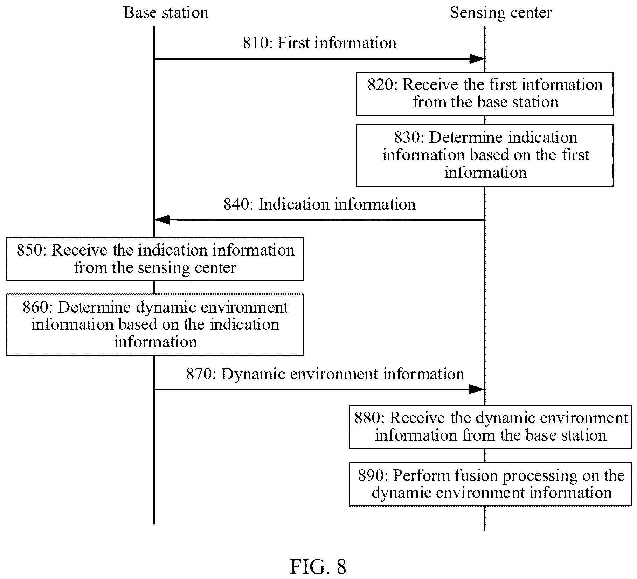

FIG. 8 is another example of an information transmission method according to an embodiment of this application. In this example, a sensing center indicates, by using indication information, that a type of information to be transmitted by a base station is dynamic environment information.

810: The base station sends first information to the sensing center, where the first information includes at least one of an identifier of the base station, position information of the base station, configuration information of the base station, or a time point at which the base station obtains second information. The second information includes at least one of artificial intelligence information or sensing information, and the second information may alternatively be semantic information extracted by the base station by using AI.

The first information may indicate a sensing capability, a communication capability, and a computing capability of the base station. The sensing capability of the base station may include a coverage area of the base station, a resolution of the second information obtained by the base station, the type of information obtained by the base station, and the like. Optionally, a terminal device or another base station also sends first information to the sensing center. Both the base station and the terminal device may be referred to as sites, and the first information may also be referred to as site information.

Optionally, a type of the second information includes dynamic environment information and static environment information.

820: The sensing center receives the first information from the base station.

Optionally, the sensing center may separately receive the first information from the terminal device or the another base station.

830: The sensing center determines the indication information based on the first information from the base station. Specifically, the sensing center may determine the indication information based on the first information, communication capacity pressure of the sensing center, and an information requirement of the sensing center.

Because current static environment information is fused and converged, only a dynamic environment needs to be reconstructed. Therefore, the indication information determined by the sensing center indicates that the type of the information to be transmitted by the base station is the dynamic environment information. When current communication pressure of the sensing center is not high, a large quantity of resources may be allocated to backhaul the artificial intelligence information and/or the sensing information. Optionally, the indication information may indicate that the type of the information to be transmitted by the base station is the dynamic environment information, and a format of the information is original data information, so that information fusion precision can be improved.

840: The sensing center sends the indication information to the base station.

Optionally, the sensing center may send indication information to the terminal device or the another base station. Optionally, the indication information sent by the sensing center to the terminal device or the another base station is determined based on the first information sent by the terminal device or the another base station. The indication information sent by the sensing center to the terminal device or the another base station may also be the same as the indication information sent to the base station. This is not specifically limited in this application.

850: The base station receives the indication information from the sensing center.

860: The base station determines third information based on the indication information, where the third information is dynamic environment information. Optionally, the dynamic environment information may be original dynamic environment information obtained by the base station. Optionally, the third information may alternatively be information obtained through compression of the original dynamic environment information based on the computing capability of the base station.

870: The base station sends the third information/the dynamic environment information to the sensing center.

880: The sensing center receives the third information/the dynamic environment information from the base station.

Optionally, the sensing center may receive third information from the terminal device or the another base station. It should be understood that the third information sent by the terminal device or the another base station is determined and sent based on the indication information sent by the sensing center.

890: The sensing center performs fusion processing on the third information, and continuously updates the dynamic environment information.

Optionally, the sensing center may perform fusion processing on the third information sent by the base station, the third information sent by the terminal device, and the third information sent by the another base station.

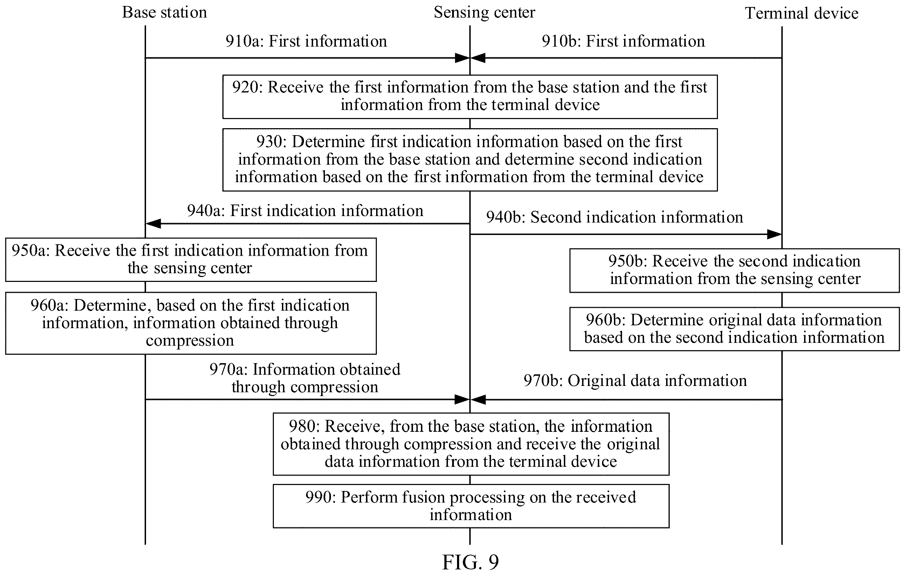

FIG. 9 is another example of an information transmission method according to an embodiment of this application. In this example, a sensing center sends different indication information to a base station and a terminal device based on different computing capabilities and sensing capabilities of the base station and the terminal device.

910a: The base station sends first information to the sensing center, where the first information includes at least one of an identifier of the base station, position information of the base station, configuration information of the base station, or a time point at which the base station obtains second information. The second information obtained by the base station includes at least one of artificial intelligence information or sensing information, and the second information may alternatively be semantic information extracted by the base station by using AI.

The first information sent by the base station may indicate a sensing capability, a communication capability, and a computing capability of the base station. The sensing capability of the base station may include a coverage area of the base station, a resolution of the second information obtained by the base station, a type of information obtained by the base station, and the like.

910b: The terminal device sends first information to the sensing center, where the first information includes at least one of an identifier of the terminal device, position information of the terminal device, configuration information of the terminal device, or a time point at which the terminal device obtains second information. The second information obtained by the terminal device includes at least one of the artificial intelligence information or the sensing information, and the second information may alternatively be the semantic information extracted by the terminal device by using AI.

The first information sent by the terminal device may indicate a sensing capability, a communication capability, and a computing capability of the terminal device. The sensing capability of the terminal device may include a coverage area of the terminal device, a resolution of the second information obtained by the terminal device, a type of information obtained by the terminal device, and the like.

Both the base station and the terminal device may be referred to as sites, and the first information may also be referred to as site information. Steps 910a and 910b may be performed without a fixed sequence.

920: The sensing center receives the first information from the base station and the first information from the terminal device.

930: The sensing center determines first indication information based on the first information from the base station. Specifically, the sensing center may determine the first indication information based on the first information sent by the base station, communication capacity pressure of the sensing center, and an information requirement of the sensing center. The first indication information may indicate that information to be transmitted by the base station is original data information.

The sensing center determines second indication information based on the first information from the terminal device. Specifically, the sensing center may determine the second indication information based on the first information sent by the terminal device, the communication capacity pressure of the sensing center, and the information requirement of the sensing center. The second indication information may indicate that the information to be transmitted by the base station is information obtained through compression.

Because the sensing capability and the computing capability of the base station are different from those of the terminal device, the computing capability and the sensing capability of the base station may be far greater than those of the terminal device. However, addition of the terminal device can increase a coverage area. Therefore, information that is to be transmitted by the terminal device and that the sensing center may need is the original data information, for example, the foregoing information in the first format. The information that is to be transmitted by the base station and that the sensing center may need is the information obtained through compression, for example, the foregoing information in any one of the second format to the fifth format. This solution can reduce information transmission overheads as well as ensuring information fusion precision.

940a: The sensing center sends the first indication information to the base station.

940b: The sensing center sends the second indication information to the terminal device. Steps 940a and 940b may be performed without a fixed sequence.

950a: The base station receives the first indication information from the sensing center.

950b: The terminal device receives the second indication information from the sensing center. Steps 950a and 950b may be performed without a fixed sequence.

960a: The base station determines third information based on the first indication information, where the third information determined by the base station is information obtained through compression of the obtained second information/the obtained original data information.

960b: The terminal device determines third information based on the second indication information, where the third information determined by the terminal device is the original data information obtained by the terminal device. Steps 960a and 960b may be performed without a fixed sequence.

970a: The base station sends, to the sensing center, the third information determined by the base station, where the third information determined by the base station is information obtained through compression of the original data information obtained by the base station.

970b: The terminal device sends, to the sensing center, the third information determined by the terminal device, where the third information determined by the terminal device is the original data information obtained by the terminal device. Steps 970a and 970b may be performed without a fixed sequence.

980: The sensing center receives, from the base station, the third information/the information obtained through compression and receives the third information/the original data information from the terminal device.

990: The sensing center performs fusion processing on the third information/the information obtained through compression from the base station and the third information/the original data information from the terminal device. In other words, the sensing center performs fusion processing on the received information.

The foregoing describes the information transmission methods provided in embodiments of this application. The following describes entities for performing the foregoing information transmission methods.

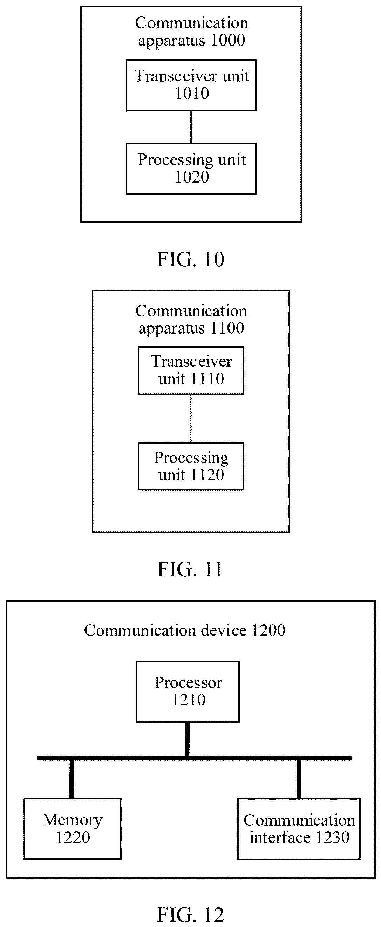

An embodiment of this application provides a communication apparatus. FIG. 10 is a block diagram of the communication apparatus 1000 according to this embodiment of this application. The apparatus may be used in the first device in embodiments of this application. The communication apparatus 1000 includes:
a transceiver unit 1010, configured to send first information to a second device, where the first information includes at least one of an identifier of the apparatus, position information of the apparatus, configuration information of the apparatus, or a time point at which the apparatus obtains second information, where the second information includes at least one of artificial intelligence information or sensing information, where
the transceiver unit 1010 is further configured to receive indication information from the second device, where the indication information indicates a type and/or a format of information to be transmitted by the apparatus; and
a processing unit 1020, configured to determine third information based on the indication information, where the third information is the second information or a part of the second information, or is determined based on the second information, where the transceiver unit is further configured to send the third information to the second device.

Optionally, the type of the information includes dynamic environment information and static environment information.

Optionally, the type of the information includes at least one of the following manners: environment information sent periodically, environment information sent semi-statically, and environment information sent at a time.

Optionally, the second information is original data information obtained by the apparatus through scanning by using different beams or at different positions.

Optionally, that the third information is determined based on the second information includes: The third information is scattering point information or image data information determined based on the second information; or the third information is polygon or polyhedron information, or imaging feature information determined based on the second information.

Optionally, the original data information includes at least one of the following: an amplitude, a phase, a time delay, polarization information, or Doppler information of a scanned echo signal; the scattering point information includes at least one of the following: coordinates, power, or a velocity of a scattering point; the polygon or polyhedron information includes at least one of the following: a center, a size, a normal direction, a category, or a velocity of a polygon or a polyhedron; the image data information includes at least one of the following: coordinates, a phase, or an amplitude of a sample; and/or the imaging feature information includes at least one of the following: a contour, a category, a texture, a color, polarization, a material, or a size.

Optionally, that the third information is determined based on the second information includes: The third information is determined based on compression of the second information.

An embodiment of this application provides a communication apparatus. FIG. 11 is a block diagram of the communication apparatus 1100 according to this embodiment of this application. The apparatus may be used in the second device in embodiments of this application. The communication apparatus 1100 includes a transceiver unit 1110 and a processing unit 1120.

The transceiver unit 1110 is configured to receive first information from a first device, where the first information includes at least one of an identifier of the first device, position information of the first device, configuration information of the first device, or a time point at which the first device obtains second information, where the second information includes at least one of artificial intelligence information or sensing information.

The processing unit 1120 is configured to determine indication information based on the first information.

The transceiver unit 1110 is further configured to send the indication information to the first device, where the indication information indicates a type and/or a format of information to be transmitted by the first device.

The transceiver unit 1110 is further configured to receive third information from the first device, where the third information is the second information or a part of the second information, or is determined by the first device based on the second information.

Optionally, the indication information is determined by the processing unit 1120 based on the first information, communication capacity pressure of a second device, and an information requirement of the second device.

Optionally, the type of the information includes dynamic environment information and static environment information.

Optionally, the type of the information includes at least one of the following manners: environment information sent periodically, environment information sent semi-statically, and environment information sent at a time.

Optionally, the second information is original data information obtained by the first device through scanning by using different beams or at different positions.

Optionally, that the third information is determined by the first device based on the second information includes: The third information is scattering point information or image data information determined by the first device based on the second information; or the third information is polygon or polyhedron information, or imaging feature information determined by the first device based on the second information.

Optionally, the original data information includes at least one of the following: an amplitude, a phase, a time delay, polarization information, or Doppler information of a scanned echo signal; the scattering point information includes at least one of the following: coordinates, power, or a velocity of a scattering point; the polygon or polyhedron information includes at least one of the following: a center, a size, a normal direction, a category, or a velocity of a polygon or a polyhedron; the image data information includes at least one of the following: coordinates, a phase, or an amplitude of a sample; and/or the imaging feature information includes at least one of the following: a contour, a category, a texture, a color, polarization, a material, or a size.

An embodiment of this application provides a communication device 1200. FIG. 12 is a block diagram of the communication device 1200 according to this embodiment of this application.

The communication device 1200 includes a processor 1210, a memory 1220, and a communication interface 1230.

The memory 1220 is configured to store executable instructions.

The processor 1210 is coupled to the memory 1220 through the communication interface 1230. The processor 1210 is configured to: invoke and run the executable instructions in the memory 1220, to implement the method in embodiments of this application. The communication device may be the first device or the second device in embodiments of this application. Optionally, the processor 1210 and the memory 1220 are integrated together.

The processor 1210 may be an integrated circuit chip, and has a signal processing capability. In an implementation process, steps in the foregoing method embodiments may be completed by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logic block diagrams that are disclosed in embodiments of this application. The general-purpose processor may be a microprocessor, or the processor may be any conventional processor or the like. Steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication device. The communication device includes an input/output interface and a logic circuit. The input/output interface is configured to obtain input information and/or output information. The logic circuit is configured to: perform the method in any one of the method embodiments, and perform processing based on the input information and/or generate output information.

An embodiment of this application further provides a computer-readable storage medium. The computer-readable storage medium stores a computer program for implementing the method in the foregoing method embodiments. When the computer program is run on a computer, the computer is enabled to implement the method in the foregoing method embodiments.

An embodiment of this application further provides a computer program product. The computer program product includes computer program code. When the computer program code is run on a computer, the method in the foregoing method embodiments is performed.

An embodiment of this application further provides a chip, including a processor. The processor is connected to a memory, the memory is configured to store a computer program, and the processor is configured to execute the computer program stored in the memory, to enable the chip to perform the method in the foregoing method embodiments.

It should be understood that in embodiments of this application, numbers "first", "second", and the like are merely for distinguishing between different objects, for example, to distinguish between different devices or different information, and do not constitute a limitation on the scope of embodiments of this application. Embodiments of this application are not limited thereto.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between associated objects. In this application, the term "at least one" may represent "one" and "two or more than two". For example, at least one of A, B, or C may represent the following seventh cases: Only A exists, only B exists, only C exists, both A and B exist, both A and C exist, and both C and B exist, and A, B, C all exist.

A person of ordinary skill in the art may be aware that in combination with the examples described in embodiments disclosed in this specification, units and algorithm steps can be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly learn that for the purpose of convenient and brief description, for a specific operating process of the foregoing system, apparatuses, and units, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate. Components displayed as units may or may not be physical units, that is, may be located in one place, or may be distributed on a plurality of network units. Apart or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

If the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, or a network device) to perform all or a part of steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
sending, by a first device, first information to a second device, wherein the first information comprises at least one of an identifier of the first device, position information of the first device, configuration information of the first device, or a time point at which the first device obtains second information, wherein the second information comprises at least one of artificial intelligence information or sensing information;
receiving, by the first device, indication information from the second device, wherein the indication information indicates a type and/or a format of information to be transmitted by the first device;
determining, by the first device, third information based on the indication information, wherein the third information is the second information or a part of the second information, or is determined based on the second information; and
sending, by the first device, the third information to the second device.

2. The method according to claim 1, wherein
the type of the information comprises dynamic environment information and static environment information.

3. The method according to claim 1, wherein
the type of the information comprises at least one of the following manners: environment information sent periodically, environment information sent semi-statically, and environment information sent at a time.

4. The method according to any one of claims 1 to 3, wherein
the second information is original data information obtained by the first device through scanning by using different beams or at different positions.

5. The method according to any one of claims 1 to 4, wherein that the third information is determined based on the second information comprises:
the third information is scattering point information or image data information determined based on the second information; or
the third information is polygon or polyhedron information, or imaging feature information determined based on the second information.

6. The method according to claim 5, wherein
the original data information comprises at least one of the following: an amplitude, a phase, a time delay, polarization information, or Doppler information of a scanned echo signal;
the scattering point information comprises at least one of the following: coordinates, power, or a velocity of a scattering point;
the polygon or polyhedron information comprises at least one of the following: a center, a size, a normal direction, a category, or a velocity of a polygon or a polyhedron;
the image data information comprises at least one of the following: coordinates, a phase, or an amplitude of a sample; and/or
the imaging feature information comprises at least one of the following: a contour, a category, a texture, a color, polarization, a material, or a size.

7. The method according to any one of claims 1 to 6, wherein that the third information is determined based on the second information comprises:
the third information is determined based on compression of the second information.

8. An information transmission method, comprising:
receiving, by a second device, first information from a first device, wherein the first information comprises at least one of an identifier of the first device, position information of the first device, configuration information of the first device, or a time point at which the first device obtains second information, wherein the second information comprises at least one of artificial intelligence information or sensing information;
sending, by the second device, indication information to the first device, wherein the indication information is determined by the second device based on the first information, and the indication information indicates a type and/or a format of information to be transmitted by the first device; and
receiving, by the second device, third information from the first device, wherein the third information is the second information or a part of the second information, or is determined by the first device based on the second information.

9. The method according to claim 8, wherein
the indication information is determined by the second device based on the first information, communication capacity pressure of the second device, and an information requirement of the second device.

10. The method according to claim 8 or 9, wherein
the type of the information comprises dynamic environment information and static environment information.

11. The method according to claim 8 or 9, wherein
the type of the information comprises at least one of the following manners: environment information sent periodically, environment information sent semi-statically, and environment information sent at a time.

12. The method according to any one of claims 8 to 11, wherein
the second information is original data information obtained by the first device through scanning by using different beams or at different positions.

13. The method according to any one of claims 8 to 12, wherein that the third information is determined by the first device based on the second information comprises:
the third information is scattering point information or image data information determined by the first device based on the second information; or
the third information is polygon or polyhedron information, or imaging feature information determined by the first device based on the second information.

14. The method according to claim 13, wherein
the original data information comprises at least one of the following: an amplitude, a phase, a time delay, polarization information, or Doppler information of a scanned echo signal;
the scattering point information comprises at least one of the following: coordinates, power, or a velocity of a scattering point;
the polygon or polyhedron information comprises at least one of the following: a center, a size, a normal direction, a category, or a velocity of a polygon or a polyhedron;
the image data information comprises at least one of the following: coordinates, a phase, or an amplitude of a sample; and/or
the imaging feature information comprises at least one of the following: a contour, a category, a texture, a color, polarization, a material, or a size.

15. A communication apparatus, comprising:
a transceiver unit, configured to send first information to a second device, wherein the first information comprises at least one of an identifier of the apparatus, position information of the apparatus, configuration information of the apparatus, or a time point at which the apparatus obtains second information, wherein the second information comprises at least one of artificial intelligence information or sensing information, wherein
the transceiver unit is further configured to receive indication information from the second device, wherein the indication information indicates a type and/or a format of information to be transmitted by the apparatus; and
a processing unit, configured to determine third information based on the indication information, wherein the third information is the second information or a part of the second information, or is determined based on the second information, wherein
the transceiver unit is further configured to send the third information to the second device.

16. The apparatus according to claim 15, wherein
the type of the information comprises dynamic environment information and static environment information.

17. The apparatus according to claim 15, wherein
the type of the information comprises at least one of the following manners: environment information sent periodically, environment information sent semi-statically, and environment information sent at a time.

18. The apparatus according to any one of claims 15 to 17, wherein
the second information is original data information obtained by the apparatus through scanning by using different beams or at different positions.

19. The apparatus according to any one of claims 15 to 18, wherein that the third information is determined based on the second information comprises:
the third information is scattering point information or image data information determined based on the second information; or
the third information is polygon or polyhedron information, or imaging feature information determined based on the second information.

20. The apparatus according to claim 19, wherein
the original data information comprises at least one of the following: an amplitude, a phase, a time delay, polarization information, or Doppler information of a scanned echo signal;
the scattering point information comprises at least one of the following: coordinates, power, or a velocity of a scattering point;
the polygon or polyhedron information comprises at least one of the following: a center, a size, a normal direction, a category, or a velocity of a polygon or a polyhedron;
the image data information comprises at least one of the following: coordinates, a phase, or an amplitude of a sample; and/or
the imaging feature information comprises at least one of the following: a contour, a category, a texture, a color, polarization, a material, or a size.

21. The apparatus according to any one of claims 15 to 20, wherein that the third information is determined based on the second information comprises:
the third information is determined based on compression of the second information.

22. A communication apparatus, comprising a transceiver unit and a processing unit, wherein the transceiver unit is configured to receive first information from a first device, wherein the first information comprises at least one of an identifier of the first device, position information of the first device, configuration information of the first device, or a time point at which the first device obtains second information, wherein the second information comprises at least one of artificial intelligence information or sensing information;
the processing unit is configured to determine indication information based on the first information, wherein the indication information indicates a type and/or a format of information to be transmitted by the first device;
the transceiver unit is further configured to send the indication information to the first device; and
the transceiver unit is further configured to receive third information from the first device, wherein the third information is the second information or a part of the second information, or is determined by the first device based on the second information.

23. The apparatus according to claim 22, wherein
the indication information is determined by the processing unit based on the first information, communication capacity pressure of the second device, and an information requirement of the second device.

24. The apparatus according to claim 22 or 23, wherein
the type of the information comprises dynamic environment information and static environment information.

25. The apparatus according to claim 22 or 23, wherein
the type of the information comprises at least one of the following manners: environment information sent periodically, environment information sent semi-statically, and environment information sent at a time.

26. The apparatus according to any one of claims 22 to 25, wherein
the second information is original data information obtained by the first device through scanning by using different beams or at different positions.

27. The apparatus according to any one of claims 22 to 26, wherein that the third information is determined by the first device based on the second information comprises:
the third information is scattering point information or image data information determined by the first device based on the second information; or
the third information is polygon or polyhedron information, or imaging feature information determined by the first device based on the second information.

28. The apparatus according to claim 27, wherein
the original data information comprises at least one of the following: an amplitude, a phase, a time delay, polarization information, or Doppler information of a scanned echo signal;
the scattering point information comprises at least one of the following: coordinates, power, or a velocity of a scattering point;
the polygon or polyhedron information comprises at least one of the following: a center, a size, a normal direction, a category, or a velocity of a polygon or a polyhedron;
the image data information comprises at least one of the following: coordinates, a phase, or an amplitude of a sample; and/or
the imaging feature information comprises at least one of the following: a contour, a category, a texture, a color, polarization, a material, or a size.

29. A communication device, comprising a processor and a memory, wherein the memory is configured to store a computer program, and the processor is configured to execute the computer program stored in the memory, to enable the communication device to perform the method according to any one of claims 1 to 7.

30. A communication device, comprising a processor and a memory, wherein the memory is configured to store a computer program, and the processor is configured to execute the computer program stored in the memory, to enable the communication device to perform the method according to any one of claims 8 to 14.

31. A communication device, comprising an input/output interface and a logic circuit, wherein
the input/output interface is configured to obtain input information and/or output information; and
the logic circuit is configured to perform the method according to any one of claims 1 to 7 or the method according to any one of claims 8 to 14, to perform processing based on the input information and/or generate the output information.

32. A communication system, comprising:
the first device according to any one of claims 1 to 7 and the second device according to any one of claims 8 to 14.

33. A computer-readable storage medium, wherein
the computer-readable medium stores a computer program; and
when the computer program is run on a computer, the computer is enabled to perform the method according to any one of claims 1 to 14.

34. A computer program product, comprising a computer program, wherein when the computer program is executed, the method according to any one of claims 1 to 14 is implemented.
